# EUROPEAN PATENT APPLICATION

(11) **EP 3 742 204 A1**
(43) Date of publication of application: **25.11.2020**
(21) Application number: 19175691.5
(22) Date of filing: 21.05.2019
(51) Int. Cl.: G01V 7/04

(54) **INFORMATION EXCHANGE USING GRAVITATIONAL WAVES**

(71) Applicant: Sensonica Limited, 2406 Nicosia (CY)
(72) Inventor: MARGARITOVA, Oxana, 25088 TOSCOLANO-MADERNO (IT); KHODKIN, Andrey, 125367 MOSCOW (RU)
(74) Representative: Samson & Partner Patentanwälte mbB

(57) **Abstract**

Radiation detection arrangement and method for detection of external radiation using TADF material.

## Description

### Field of the invention

The present invention relates, generally, to the field of information exchange and in particular, to the field of communication.

Particularly, the present invention relates to a communication system using gravitational radiation such as gravitational waves and a TADF (thermally activated delayed fluorescence) material based radiation detection arrangement therefore.

### Background of the invention

The generation of gravitational waves has been widely discussed in science. However, there is still a lack of detection devices and methods that are able to accurately detect gravitational waves.

### Objection of the invention

An object of the present invention is to provide a device and method for detection of gravitational waves and to provide a system and method for information exchange, e.g. a communication system, on its basis.

### Summary of the invention

To solve the above object, the present invention provides apparatus and method subject-matter according to the accompanying independent claims, wherein variations, embodiments and examples thereof are defined in accompanying dependent claims.

More particularly, the present invention provides a radiation detection arrangement for detection of a gravitational signal, wherein the arrangement comprises:
- a computing device,
- a detection layer comprising thermally activated delayed fluorescence TADF material, the thermally activated delayed fluorescence TADF material having a plurality of excitation frequencies
- an excitation radiation source device adapted to emit excitation radiation having at least one of the excitation frequencies to excite the TADF material, wherein
   -- the TADF material exhibiting upon excitation with excitation radiation a thermally activated delayed fluorescence TADF emission,
- a radiation detector device communicatively coupled with the computing device, the radiation detector device being adapted to detect TADF emission from the detection layer and provide respective detection data to the computing device,
- the TADF material having a TADF emission pattern without exposure to the gravitational signal and exhibiting different TADF emission pattern with exposure to the gravitational signal,
- the computing device being adapted to
   - compute detection data from the radiation detector device to determine a TADF emission pattern without exposure to the gravitational signal and a different TADF emission pattern with exposure to the gravitational signal,
   - compare the determined TADF emission patterns,
   - determine, on the basis of the comparison, exposure to the gravitational signal.

The gravitational signal may be referred to as gravitational radiation or gravitational waves.

The detection layer may be at least one of
- planar,
- provided in a coating material,
- shaped as a part of a sphere,
- shaped as a hollow or solid sphere,
- shaped as a polyhedron.

The radiation detector device may comprise at least one of
- a discrete radiation detector,
- a radiation detector array including at least two detector elements,
- electro-optical transducer,
- image intensifier tube,
- vacuum tube,
- CMOS chip
- a CCD chip.

The radiation detection arrangement may comprise at least two radiation detector devices wherein the detection layer is arranged between the at least two radiation detector devices. The radiation detection arrangement may comprise a control device for controlling the operation of the excitation radiation source device, wherein the control devices is adapted to operate the excitation radiation source device in a constant emission mode and/or a variable/modifiable emission mode, comprising pulsed and/or periodical emission mode.

The computing device may be able to compute detection data from the radiation detector device during and/or following radiation emission from the excitation radiation source device.

The radiation detection arrangement may comprise an optical system being arranged between the detection layer and the radiation detector device.

The radiation detection arrangement may comprise a housing accommodating the components of the radiation detection arrangement.

The housing may have shielding properties for shielding of at least one of:
- electro-magnetic radiation;
- X-ray radiation;
- ultraviolet radiation;
- Gamma radiation;
- corpuscular radiation, comprising alpha radiation, beta radiation, neutrons and/or protons.

The radiation detection arrangement may comprise at least one temperature sensing device for sensing temperature of at least one of
- the detection layer,
- the TADF material,
- the excitation radiation source device,
- the radiation detector device,
- the housing,
- the optical system,
- the computing device.

The radiation detection arrangement or one or more parts thereof (particularly, the parts listed above) may be placed in a temperature controlled environment.

For example, it is envisaged to use a passive temperature controlled environment, where the radiation detection arrangement or one or more parts thereof is arranged in a box, container, housing and the like having thermal characteristics (e.g. walls with high thermal resistance) that maintain a temperature in its interior at least for some period of time. Examples for a passive temperature controlled environment include a Dewar flask/container.

Further, it is also envisaged to use an active temperature controlled environment, where the radiation detection arrangement or one or more parts thereof is arranged in a box, container, housing and the like for which the inner temperature may be actively controlled by using heating and/or cooling of the interior and at least one temperature sensor for temperature control.

Also, combinations of active and passive temperature controlled environments may be used, wherein, for example, some parts of the radiation detection arrangement are in an active temperature controlled environment and other parts of the radiation detection arrangement are in a passive temperature controlled environment.

Further, the present invention provides a method of detecting a gravitational signal using a radiation detection arrangement, wherein the method comprises the steps of:
- providing a detection layer comprising thermally activated delayed fluorescence TADF material, the thermally activated delayed fluorescence TADF material having a plurality of excitation frequencies and,
- emitting excitation radiation having at least one of the excitation frequencies by means of a excitation radiation source device onto the detection layer in order to excite the TADF material, wherein
   -- the TADF material exhibiting upon excitation with excitation radiation a thermally activated delayed fluorescence TADF emission,
- detecting TADF emission from the detection layer by means of a radiation detector device communicatively coupled to a computing device, wherein
- the TADF material having a TADF emission pattern without exposure to the gravitational signal and exhibiting a different TADF emission pattern with exposure to the gravitational signal,
- providing detection data from the radiation detector device to the computing device,
- computing the detection data from the radiation detector device to determine a TADF emission pattern without exposure to the gravitational signal and a different TADF emission pattern with exposure to the gravitational signal,
- comparing the determined TADF emission patterns,
- determining, on the basis of the comparison, exposure to the gravitational signal.

The method may further comprise the steps of:
- controlling the operation of the excitation radiation source device by means of a control device and
- emitting radiation, by operating the excitation radiation source device, in a constant emission mode and/or a variable/modifiable emission mode, comprising pulsed and/or periodical emission mode.

According to the method of the present invention, in an excitation phase, excitation radiation is emitted onto the detection layer in order to excite the TADF material and, in a detection phase subsequent to the excitation phase, TADF emission from the detection layer is detected.

In some examples, the excitation phase and the detection phase may, at least partially, overlap. For example:
- the excitation phase and the detection phase may start at the same time and may take place for the same period of time;
- the excitation phase and the detection phase may start at the same time, wherein the excitation phase ends, while the detection is phase is still ongoing and is continued for some further period of time;
- the detection phase takes place for a period of time, during which at least two excitation phases take place one after another with a pause therebetween (i.e. period of time without excitation), wherein the at least excitation phases may have the same duration or different durations;
- the excitation phase may start and, at some point of time when the excitation phase takes place, the detection phase may also start, wherein the excitation phase may end earlier or at the same time, or later than the detection phase.

In further examples, there may a transition phase between the excitation phase and the detection phase, during which transition phase neither excitation nor detection takes place.

The method may further comprise the step of arranging an optical system between the detection layer and the radiation detector device for adjusting the TADF emission onto the radiation detector device.

The method may further comprise the steps of:
- providing a housing, having shielding properties to shield at least one of:
- electro-magnetic radiation,
- X-ray radiation,
- Ultraviolet radiation,
- Gamma radiation,
- Corpuscular radiation,
- alpha radiation,
- beta radiation,
- neutrons
- protons.

The method may further comprise at least one of the steps of:
- thermally calibrating the radiation detection arrangement for compensation of temperature related effects on the radiation detection device,
- arrangement calibrating the radiation detection device as such for compensation of at least background radiation to which the radiation detection device is exposed.

The present invention further provides a radiation generation arrangement for generating a modulated gravitational signal, wherein the radiation generation arrangement may be constructed in accordance with Gertsenshtein effect and comprise:
- a computing device,
- a source device adapted to provide an incident signal, wherein
   the incident signal comprises first electromagnetic radiation having a first wavelength,
- one or more magnetic devices adapted to generate a magnetic field in a signal-generation region of the radiation generation arrangement,
- a leading device coupled to the source device,
   wherein the leading device is adapted to lead the incident signal emitted by the source device along a leading direction through the signal-generation region of the radiation generation arrangement,
- wherein the magnetic field in the signal-generation region is perpendicular to the leading direction of the leading device, wherein
   -- the first electromagnetic radiation of the incident signal generates/provides the gravitational signal upon exposure to the magnetic field when reaching the signal-generation region, wherein
   - a housing for accommodating the components of the radiation generation arrangement, wherein the housing has shielding properties for shielding at least a second electromagnetic radiation having a second wavelength,
- a modulation device adapted to generate modulated gravitational signals by modulating the incident signal emitted by the source device to include information to be transmitted by the radiation generation arrangement into the modulated gravitational signals.

The gravitational signal comprises gravitational radiation, particularly, gravitational waves, wherein the wavelength of the gravitational waves substantially corresponds to the first wavelength of the first electromagnetic (EM) radiation.

The source device of the radiation generation arrangement may be a laser emitting electromagnetic radiation having a wavelength which is substantially constant.

The magnetic devices of the radiation generation arrangement may be two rear-earth permanent magnets that are arranged opposite one another, thereby defining the signal-generation region and comprising an allow of neodymium, iron and boron.

The leading device of the radiation generation arrangement may be an optical waveguide that guides electromagnetic waves in the optical spectrum, wherein the leading device may be a light tube that guides the incident signal provided by the source device.

The radiation generation arrangement may further comprise modulating device that may be a signal generator controlling emission of the incident signal of the source device to generate a modulated gravitational signal.

The modulated signal may comprise a first modulated gravitational signal generated by using a first modulation frequency f1 at a first time and a second modulated gravitational signal generated by using a second modulation frequency f2 at a second time, wherein
modifying, by the modulation device, of the incident signal emitted by the source device causes the generated gravitational signal to be a modulated gravitational signal,
wherein the modulated gravitational signal is modulated by the first modulation frequency f1 at the first time and the second modulation frequency f2 at the second time of the modulated incident signal.

Thus, the same modulation schemes and multiplex methods generally used for telecommunications like TDMA, FDMA and the like may be applicable for the gravitational signal as well.

The present invention provides a method for generating a modulated gravitational signal using a radiation generation arrangement, wherein the method may comprise:
- providing an incident signal by means of a source device, wherein
   the incident signal comprises first electromagnetic radiation having a first wavelength,
- generating a magnetic field by means of one or more magnetic devices defining a signal-generation region
- leading, by means of a leading device coupled to the source device, the incident signal emitted by the source device along a leading direction through the signal-generation region,
   wherein the magnetic field in the signal-generation region is perpendicular to the leading direction of the leading device, wherein
   -- the first electromagnetic radiation of the incident signal generates/provides a gravitational signal upon exposure to the magnetic field when reaching the signal-generation region, wherein
   - providing a housing for accommodating the components of the radiation generation arrangement, wherein the housing has shielding properties for shielding at least a second electromagnetic (EM) radiation having a second wavelength,
- generating, by means of a modulation device, modulated gravitational signals by modifying the incident signal emitted by the source device to include information to be transmitted by the radiation generation arrangement into the modulated gravitational signals,
- transmitting modulated gravitational signals and the information included therein.

The modulated signal may be a be a frequency modulated signal generated by using a first modulation frequency f1 at a first time and a second modulation frequency f2 at a second time, wherein
modifying, by the modulation device, of the incident signal emitted by the source device causes the generated gravitational signal to be a modulated gravitational signal,
wherein the modulated gravitational signal modulated by the first modulation frequency f1 at the first time and the second modulation frequency f2 at the second time of the modulated incident signal.

The present invention provides a radiation detection arrangement for detection of modulated gravitational signals may comprise:
- a computing device,
- a receiving section for receiving gravitational signals, wherein the received gravitational signals are modulated gravitational signals,
- a detection layer comprising thermally activated delayed fluorescence TADF material, the thermally activated delayed fluorescence TADF material having a plurality of excitation frequencies,
- an excitation radiation source device (14) adapted to emit excitation radiation (18) having one of the plurality of excitation frequencies to excite the TADF material, wherein
   -- the TADF material exhibiting upon excitation with excitation radiation a thermally activated delayed fluorescence TADF emission,
   -- the TADF material having a TADF emission pattern with exposure to a first one of the modulated gravitational signals and exhibiting a different TADF emission pattern with exposure to a second one of the modulated gravitational signals,
- a radiation detector device communicatively coupled with the computing device, the radiation detector device being adapted to detect TADF emission from the detection layer and provide respective detection data to the computing device,
- the computing device being adapted to
- compute detection data from the radiation detector device to determine a TADF emission pattern with exposure to the first modulated gravitational signal and a different TADF emission pattern with exposure to the second modulated gravitational signal,
- compare the determined TADF emission patterns,
- determine, on the basis of the comparison, information comprised in the gravitational signals.

The modulated gravitational signals comprising a first modulated gravitational signal modulated by a first modulation frequency f1 at a first time and a second modulated gravitational signal modulated by a second modulation frequency f2 at a second time.

The radiation detection arrangement may further comprise
- a first narrow band filter set for the first frequency modulation f1 and
- a second narrow band filter set for the second frequency modulation f2, of the frequency modulated gravitational signal,
- a first envelope estimator,
- a second envelope estimator,
- a first envelope extremum finder and
- a second envelope extremum finder.

The radiation detection arrangement may further comprise
- a sampler to provide decoded modulated gravitational signal,
wherein the sampler makes a decision on whether to accept the first frequency modulated f1 gravitational signal or the second frequency modulated f2 gravitational signal.

The radiation detection arrangement may further comprise
- a time-measurement device (10) to synchronize the first decoded frequency modulated f1 gravitational signal and/or the second decoded frequency modulated f2 gravitational signal.

The present invention provides a method for detecting modulated gravitational signals using a radiation detection arrangement, wherein the radiation detection arrangement comprises
- a detection layer comprising thermally activated delayed fluorescence TADF material, the thermally activated delayed fluorescence TADF material having a plurality of excitation frequencies,
- an excitation radiation source device (14) adapted to emit excitation radiation (18) having one of the plurality of excitation frequencies to excite the TADF material, wherein
   -- the TADF material exhibiting upon excitation with excitation radiation a thermally activated delayed fluorescence TADF emission,
   -- the TADF material having a TADF emission pattern with exposure to a first one of the modulated gravitational signals and exhibiting a different TADF emission pattern with exposure to a second one of the modulated gravitational signals,
- a radiation detector device communicatively coupled with the computing device, the radiation detector device being adapted to detect TADF emission from the detection layer and provide respective detection data,
wherein the method may comprise:
- receiving gravitational signals, wherein the received gravitational signals are modulated gravitational signals,
- compute detection data from the radiation detector device to determine a TADF emission pattern with exposure to the first modulated gravitational signal and a different TADF emission pattern with exposure to the second modulated gravitational signal,
- compare the determined TADF emission patterns,
- determine, on the basis of the comparison, information comprised in the gravitational signals.

The modulated gravitational signals comprising a first modulated gravitational signal modulated by a first modulation frequency f1 at a first time and a second modulated gravitational signal modulated by a second modulation frequency f2 at a second time.

The radiation detection method may further comprise
- sampling the modulated gravitational signals to provide decoded modulated gravitational signals,
wherein the sampling makes a decision on whether to accept the first frequency modulated f1 gravitational signal or the second frequency modulated f2 gravitational signal.

The radiation detection method may further comprise
- synchronizing the first decoded frequency modulated f1 gravitational signal and/or the second decoded frequency modulated f2 gravitational signal.

The present invention further provides a system for information exchange, such as a communication system, which system may comprise:
- a radiation generation arrangement for transmitting a modulated gravitational signal as set forth above, and
- a radiation detection arrangement for receiving a modulated gravitational signal as set forth above.

The present invention further provides a communication method, which may comprise:
- transmitting a modulated gravitational signal as set forth above, and
- receiving a modulated gravitational signal as set forth above.

### Summary of the drawings

In the description of embodiment further below, it is referred to the following drawings, which show:
- Fig. 1: a schematic illustration of a radiation detection arrangement for detection of a gravitational signal,
- Fig. 2: a schematic illustration of a further radiation detection arrangement for detection of a gravitational signal,
- Fig. 3: a schematic illustration of a yet further radiation detection arrangement for detection of a gravitational signal,
- Fig. 4: a schematic illustration of radiation detection arrangement's emission patterns with and without the gravitational signal,
- Figs. 5a and 5b: schematic illustrations for explanation of emission distributions with and without the gravitational signal,
- Fig. 6: a schematic illustration of an exemplary radiation generation arrangement for generating a gravitational signal,
- Fig. 7: a communication system using a radiation detection arrangement according to the invention as a radiation detection arrangement along with the exemplary radiation generation arrangement.

### Description of embodiments

Generally, features and functions referred to with respect to specific drawings and embodiments may also apply to other drawings and embodiments, unless explicitly noted otherwise.

Known conventional components, which are necessary for operation, (e.g. energy supply, cables, controlling devices, processing devices, storage devices, etc.) are neither shown nor described, but are nevertheless considered to be disclosed for the skilled person.

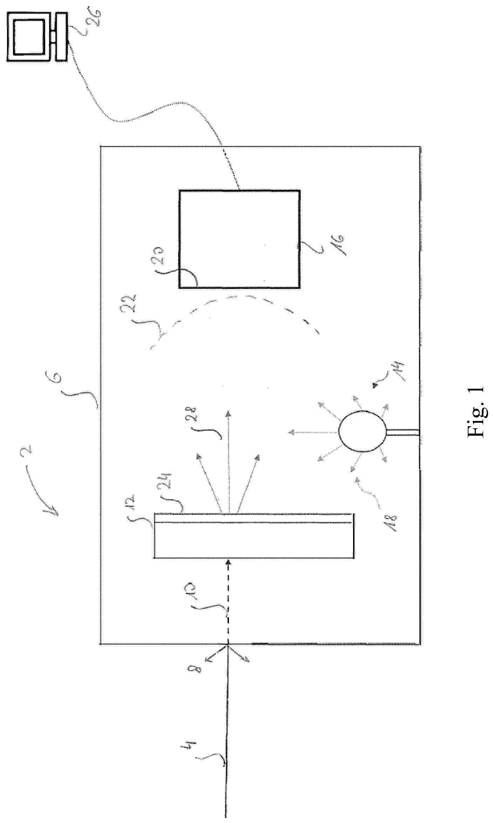

Fig. 1 schematically illustrates a radiation detection arrangement 2 for detection of a gravitational signal, e.g. having low intensity and/or energy. The gravitational signal may be referred to as gravitational radiation or gravitational waves. External radiation 4, such as the gravitational signal, refers to radiation impinging onto the radiation detection arrangement 2 and/or the radiation detection arrangement 2 is exposed to.

In the drawings, just a radiation beam along one direction (like from a single source) is illustrated. However, this is just for simplification. Rather, the gravitational signal 4 may include more than one radiation beam, namely a plurality thereof, and/or radiation fronts. Also, the gravitational signal 4 may impinge from more than one direction, e.g. a plurality of different directions even opposing ones.

The radiation detection arrangement 2 comprises a housing 6. The housing 6 acts as shield against external radiation 6 that shall not be detected by the radiation detection arrangement 2. Such radiation is referred to as shieldable radiation 8. Examples for shieldable radiation 8 include one or more of the following: visible light, neutrons, electrons, protons, myons, cosmic radiation, electro-magnetic radiation, X-ray radiation, ultraviolet radiation, Gamma radiation, corpuscular radiation, alpha radiation, beta radiation, thermal radiation, thermal disturbances.

Shieldable radiation 8 is blocked by the housing 6 so that no part of shieldable radiation 8 can enter the space defined the housing 6. This is illustrated in the drawings by arrows 10 indicting reflected shieldable radiation. However, shielding effected by the housing 6 may be (additionally or alternatively) provided by absorption or any other way ensuring that no shieldable radiation reaches the inner of the housing.

Contrary thereto, the housing 6 does not block, shield off or prohibit in any other way the gravitational signal 10 that may be measured. As mentioned before, the gravitational signal may be gravitational radiation or, particularly, gravitational waves.

The housing 6 may be adapted to act as at least one of the following:
- optically non-transparent shield,
- thermal shield,
- electromagnetic shield,
- shield against at least one of UV radiation, gamma radiation, corpuscular radiation, X-rays, alpha radiation, beta radiation.

The material of the housing 6 may comprise, for example, at least one of the following:
- metal (e.g. for optically non-transparent shielding),
- plastic(e.g. for optically non-transparent shielding),
- gas gap and/or low thermal conductivity polymers (e.g. for thermal shielding),
- multi layered construction including layers of different material, for example alternating layers of material having low and high thermal conductivity, like copper foil, (e.g. for thermal shielding),
- low thermal conductivity material, like polymer, (e.g. for thermal shielding),
- closed (e.g. complete and/or hermetic) grounded metal coating (e.g. Al, Cu) (e.g. for electromagnetic shielding)
UV/gamma/corpuscular/X-rays/ alpha/beta shield:
- Aluminum (e.g. for shielding of at least one of UV radiation, gamma radiation, corpuscular radiation, X-rays, alpha radiation, beta radiation),
- glass (e.g. for shielding of at least one of UV radiation, gamma radiation, corpuscular radiation, X-rays, alpha radiation, beta radiation),
- textolite (e.g. for shielding of at least one of UV radiation, gamma radiation, corpuscular radiation, X-rays, alpha radiation, beta radiation),
- concrete (e.g. for shielding of at least one of UV radiation, gamma radiation, corpuscular radiation, X-rays, alpha radiation, beta radiation).

An exemplary housing may have walls comprising an Aluminum sheet/layer with a thickness of at least about 10 mm; one, two or three glass layers each having a thickness of at least about 2 mm; a textolite layer with a thickness of about 1 mm with an optional cooper foil at least at one side of the textolite layer.

The distance between the inner surface of the housing 6 and the detection layer 12 may be 0 mm (i.e. no distance) or, for example, in the range of at least about 30 mm.

Further shielding can be achieved by providing a housing that - in addition to at least one of the examples mentioned above or as option thereto - is made of concrete and completely surrounds the radiation detection arrangement. This can be accomplished by, for example, positioning the radiation detection arrangement in a hollow concrete cube having 6 concrete walls with a thickness of, e.g., about 3 meters and more.

Inside the housing 6, the radiation detection arrangement 2 comprises a detection layer 12, which comprises at least a TADF material, i.e. material exhibiting thermally activated delayed fluorescence. The TADF material of the detection layer 12 has a plurality of excitation frequencies, where the TADF material, if being excited by radiation having at least one of the excitation frequencies, exhibits a thermally activated delayed fluorescence.

Also inside the housing 6, the radiation detection arrangement to comprises a excitation radiation source 14 and a radiation detector device 16.

The excitation radiation source device 14 is capable of providing radiation (at least) in the excitation frequency range (i.e. having at least one of the plurality of excitation frequencies) of the TADF material. Such radiation is referred to as excitation radiation 18. The excitation radiation source device 14 can be controlled to provide continuous excitation radiation 18, i.e. to be operated in a constant emission mode. The excitation radiation source device 14 can be controlled to provide non-continuous excitation radiation 18, i.e. to be operated in a variable emission mode, to provide, for example, pulsed and/or periodical excitation radiation.

The excitation radiation source device 18 can comprise one or more excitation radiation sources, for example, one or more LEDs. The drawings show a single excitation radiation source device 18. However, two and more excitation radiation source devices arranged adjacent to each other or spaced from each other can be employed.

The radiation detector device 16 is capable of detecting (at least) radiation provided by the detection layer 12, particularly thermally activated delayed fluorescence from the TADF material in response to excitation by excitation radiation from the excitation radiation source device 18.

The radiation detector device 16 can comprise one or more radiation detectors, for example photo detectors being sensitive to a least fluorescence that the TADF material can emit.

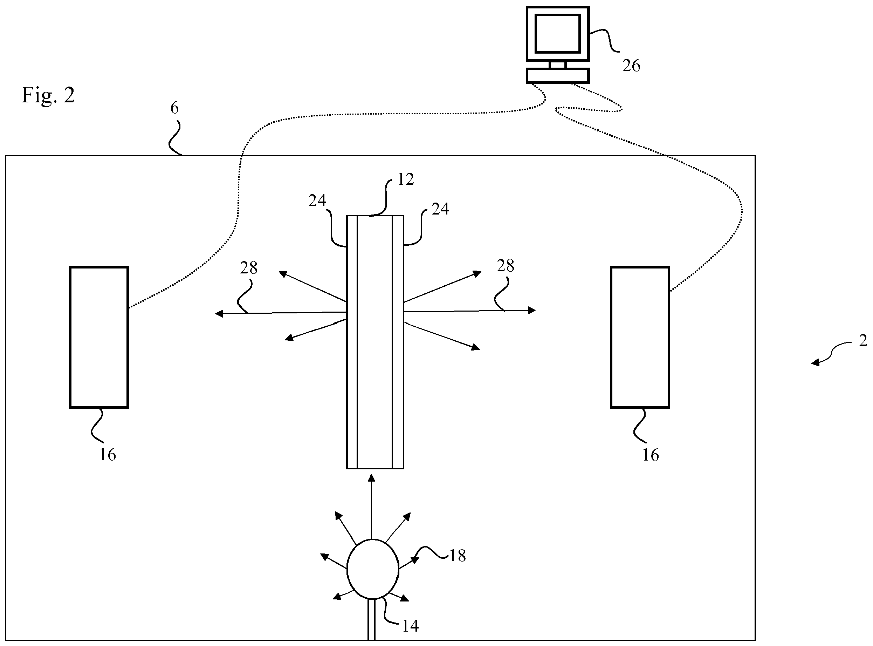

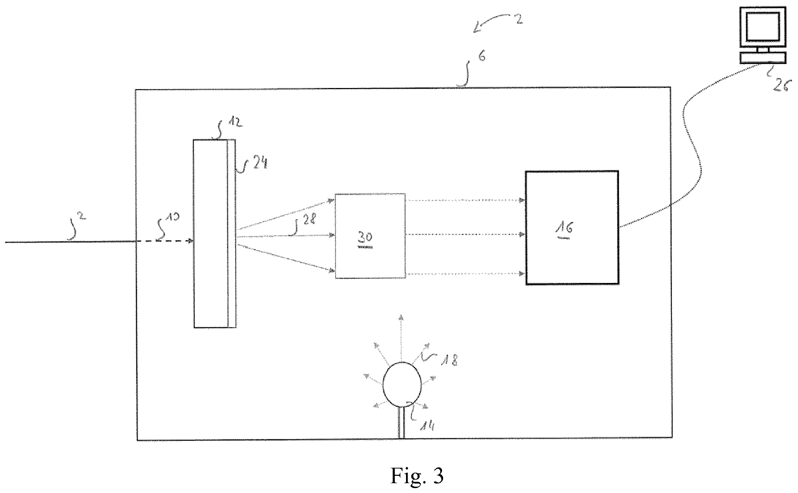

As illustrated in Figs. 1 and 3, one radiation detector device 16 can be employed, while Fig. 2 illustrates an embodiment employing two radiation detector devices 16. However, more than two radiation detector devices 16 can be used, in order to, for example, detect radiation from the detection layer at different locations in the housing 6.

The radiation detector device 16 can have a planar detection surface 20, as illustrated in the drawing. However, radiation detector devices having a, for example, curved detection surface as indicated by the dashed curved detection surface 22 in Fig. 1.

The size and form of the detection surface can be designed such that it conforms the size and form of a detection layer's emission surface 24 from where detection layer radiation and, particularly, TADF fluorescence can be emitted. This allows capturing and detecting as much radiation from the detection layer as possible.

According to the illustrations of Figs. 1 and 3, the detection layer 12 has a single emission surface 24, while the detection layer 12 of Fig. 2 has two emission surfaces 24.

The radiation detector device 16 is capable of outputting detection data indicating radiation detected by the radiation detector device 16.

In addition or as alternative, an optical system can be arranged between the detection layer 12 and a radiation detector device 16, as explained further below with reference to Fig. 3.

The radiation detection arrangement 2 further includes computing device 26. The computing device 26 is communicatively coupled with the radiation detector device 16 to, at least, obtain detection data outputted from the radiation detector device 16. Further, the computing device 26 may be arranged to control the radiation detector device 16 and its operation, respectively.

The computing device 26 may be also communicatively coupled with the excitation radiation source device 14 to control the operation thereof.

A communicative coupling between the computing device 26 and another part of the radiation detection arrangement (e.g. the radiation detection device 16 and excitation radiation source device 14) may be wired and/or wireless.

The computing device 26 is adapted, e.g. in the form of respectively designed hardware and/or software, to compute detection data from the radiation detector device 26 in a manner to determine one or more emission patterns resulting from radiation emitted by the detection layer and, particularly, from thermally activated delayed fluorescence from the TADF material.

If applicable, the computing device 26 may control the operation of the excitation radiation source device 14. For example, the excitation radiation source device 14 may be controlled such that it emits excitation radiation 18 synchronized with detection operation of the radiation detector device 26. In some examples, the following procedure may be used: The excitation radiation source device 14 may be operated to emit excitation radiation for a predefined first period of time (e.g. a phase of 1 ms).

Then, during a second predefined period of time (e.g. a phase of 1 ms) no excitation radiation is emitted and the radiation detector device 26 is not activated/operated to detect radiation from the detection layer 12 and, particularly thermally activated delayed fluorescence from the TADF material. This period of time and phase, respectively, allows transition processes to take place in, e.g., the TADF material and/or the hardware components of the arrangement.

After that, during a third predefined period of time (e.g. a phase of 3 ms) the radiation detector device 26 is activated/operated to detect radiation from the detection layer 12 and, particularly thermally activated delayed fluorescence from the TADF material.

This procedure can be referred to as radiation detection based on pre-excited TADF material, because in a first phase (also referred to a excitation phase) TADF material is excited by excitation radiation and in a second phase (also referred to a detection phase) TADF emission is detected/sensed on the basis of which measurable radiation can be detected. Preferably, as indicated above, there is an intermediate phase (also referred to as transition phase) between the excitation phase and the detection phase

In other examples, the excitation radiation source device 14 may be operated to emit excitation radiation as pulses of the same or different level and/or with predefined time intervals of the same or varying length in between. Also, the excitation radiation source device 14 may be operated to emit constant excitation radiation (without periods without excitation radiation) of the same level or of at least two different levels (e.g. like a waveform or stepwise).

Generally, any type of one or more TADF material and combinations thereof may employed. An exemplary TADF material used in experiments included an organic luminofor comprising a mixture of fluorescein Natrium and boric acid.

A possible mass ration of the components can be in the range of 1:100,000 - 1:500.

The components can be mixed and heated to manufacture the exemplary TADF material, for example according to a heating profile. The mixed materials are heated up a maximal temperature in the range between 200 °C and 260 °C for at least 20 minutes under a pressure below 0.8 bar.

The heating may be performed in pre-molded forms to obtain TAFD material having a predefined shape. Also, after heating the material can be grounded and mixed with a carrier material (e.g. epoxy), after which the resulting material can be formed to get any desired shape (e.g. by applying onto a support surface).

The radiation detection device of Fig. 1, the TADF material of the detection layer 12 is excited by excitation radiation 18 from the excitation radiation source device 14, and in response thereto, emits thermally activated delayed fluorescence 28. The emitted thermally activated delayed fluorescence 28 impinges onto the radiation detector device 16, which generates respective detection data. The detection data generated by the radiation detector device 16 are computed by the computing device 26 to determine one or more emission patterns resulting from thermally activated delayed fluorescence from the TADF material.

In general, this is also the case with the radiation detection devices of Figs. 2 and 3.

However, in the radiation detection device of Fig. 2, two radiation detector devices 16 are used to detect thermally activated delayed fluorescence 28 emitted by the TADF material of the detection layer 12. The detection data respectively generated by the radiation detector devices 16 are computed by the computing device 26 to determine one or more emission patterns resulting from thermally activated delayed fluorescence from the TADF material. Since detection data from two radiation detector devices 16 are available, the detection data from the different radiation detector devices 16 can be used to compare the one or more emission patterns on one of radiation detector devices 16 with the one or more emission patterns of the other radiation detector device 16.

For example, two and more radiation detector devices 16 can be used for a correlated detection of measurable radiation 10, wherein, e.g., only synchronized detection data from different radiation detector devices 16. Synchronization may include to operate the radiation detection devices 16 such that their respective detection data are provided at the same time or processed such that detection data generated at the same time and/or in the same time period are processed together. In addition or as alternative, synchronization may include to use together detection data being generated at/in corresponding areas of the respective detection surfaces of the radiation detection devices 16. In addition or as alternative, synchronization may include using detection data being indicative of TADF emission coming from different parts/surfaces of the detection layer 12 and TADF material, respectively, in order to, for example, detect TADF emission from opposing detection layer's surfaces as illustrated in Fig. 2.

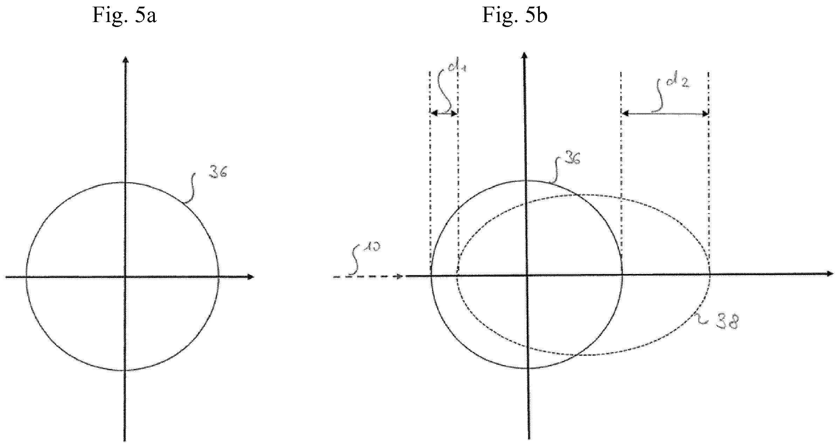

As further example, two and more radiation detector devices 16 can be used to distinguish different types of measurable radiation 10, wherein, e.g., differences between detection data from different radiation detector devices 16 are calculated. More detailed observations in this respect can be find further below with reference to Figs. 5a and 5.

In the radiation detection device of Fig. 3, an optical system 30 is used to collect and/or focus thermally activated delayed fluorescence from the TADF material onto the radiation detector device 16, in order to, for example, avoid "loosing" such radiation from being captured by the radiation detector device.

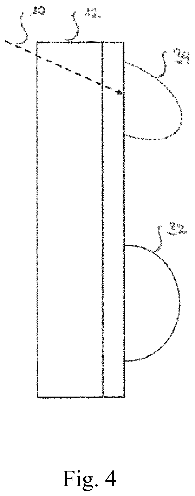

In any case, the pattern in which thermally activated delayed fluorescence is emitted from the TADF material depends on the gravitational signal reaching the TADF material. As illustrated in Fig. 4, without the gravitational signal reaching the detection layer 12 (i.e. without measurable radiation 10), the TADF material exhibits a more or less homogenous emission pattern 32. If the gravitational signal 10 reaches the detection layer 12, the TADF material exhibits a shifted emission pattern 34, wherein the pattern shift depends from the direction of the gravitational signal 10.

This is further illustrated in Fig. 4b, which shows that the gravitational signal 10 "deforms" the homogenous emission pattern 32 to the shifted emission pattern 34. This deformation can be used to determine the direction of incoming gravitational signal 10.

As shown in Fig. 5a, without the gravitational signal 10, thermally activated delayed fluorescence from the TADF material results in a uniform distribution 36 of photon emission. As illustrated in Fig. 5b, the gravitational signal 10 shifts and deforms the emission pattern such that a shifted and deformed distribution 38 of photon emission results. For example, in the illustration of Fig. 5b the distances d1 and d2 between corresponding areas of the uniform distribution 36 and the shifted and deformed distribution 38 indicate that the direction along which the underlying gravitational signal 10 comes from.

As known, in response to excitation radiation, generally TADF material exhibits two effects, namely TAFD emission and phosphorensce emission. While phosphorensce emission results from an inter system crossing (ISC) transition, i.e. a transition from the S1 state to the T1 state, TADF emission results from a reverser ISC transition, i.e. a transition from the T1 state to the S1 state.

However, experiments have demonstrated that phosphorensce emission does not show a reaction to the gravitational signal, respectively; at least the reaction has not impact on the radiation detection based on TAFD emission. Particularly, the gravitational signal does not affect phosphorensce emission of TADF material such shifted emission pattern as shown in Figs. 4 and 5 results. Rather, the phosphorensce emission pattern remains essential the same. Therefore, phosphorensce emission impinging on the radiation detection device 16 can be considered as essentially constant background light.

Data outputted by the radiation detection device 16 in response to received phosphorensce emission can be compared with background noise and treated in the same way. For example, overall data output from the radiation detection device 16 may be filtered to remove phosphorensce emission related data in order to obtain, as effective radiation detection device output, detection data being indicative of TADF emission.

In general, TADF material is temperature sensitive and, as a result, has temperature dependent TADF emission. Therefore, a thermal calibration method may be used to compensate temperature related effect.

For example, the whole radiation detection arrangement 2 may be set up in a thermally controlled thermal chamber, in which the temperature is controlled to change from a low/minimum level to a high/maximum level, preferably with constant speed. The temperature may be changed so slow that, inside the thermal chamber, a quasi thermal equilibrium is achieved. For example, the temperature change may be such that the time constant(s) of the thermal calibration method is(are) smaller than dynamics of the thermal chamber of the thermal calibration setting. For example, in some cases the time constant of the thermal calibration method can be in the range of about two seconds and measuring time constant of the thermal calibration setting can be in the range of about two minutes. As further example, the thermal dynamics of the thermal calibration setting can be a thermal change in the range of about 20 °C in about one hour.

The above temperature change process may carried out once or may be repeated for two or more different temperature change profiles (e.g. different constant speeds, stepwise including using different step sizes). Experiments have shown that one or more temperature change processes lasting about five to seven hours provide a good basis for thermal calibration.

During thermal calibration, the radiation detection arrangement 2 may be operated normally, for example, so that the TADF material is excited by excitation radiation and TADF emission is detected by the radiation detector device 16.

During the temperature change process(es), temperature and changes thereof of at least one of the detection layer 12, the TADF material, the excitation radiation source device 14 (and/or components thereof), the radiation detection device 16, the detection surface (e.g. detection surface 20 or 22), the detection layer's surface, the optical system 30, the housing 6 and electrical and/or electronic components (e.g. cables, amplifiers, signal conditioners, ADCs etc.) in the housing and/or in the thermal chamber are measured. This may be accomplished by one or more temperature sensors respectively arranged in/on the housing and/or the thermal chamber.

The thusly measured temperatures and changes thereof (e.g. in form of respective time series) and, particularly, information on the TADF material temperature and changes thereof, can be used to determine information (e.g. in form of regression curves) indicative of the temperature dependency of the radiation detection arrangement 2 and parts thereof, for example data output by the radiation detector device 16 and/or data received by the computing device 26.

Such information may be used to compensate temperature dependent effects in radiation detection by the radiation detection device 2.

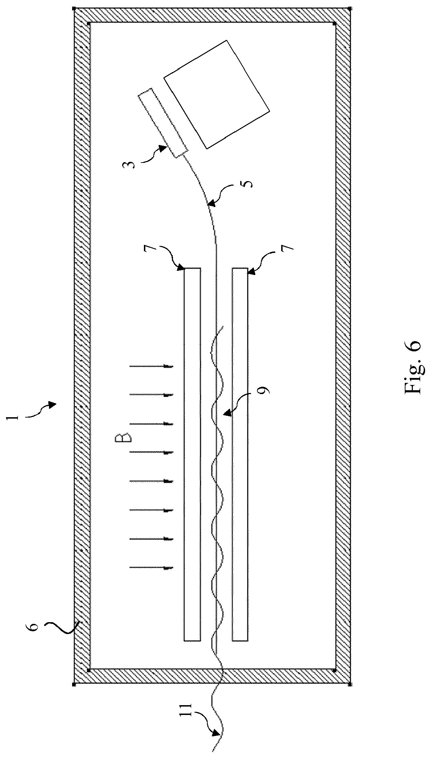

Fig. 6 shows a schematic illustration of an exemplary radiation generation arrangement for generating a modulated gravitational signal. The radiation generation arrangement may be constructed in accordance with Gertsenshtein effect.

The radiation generation arrangement 1 comprises a housing 6, in which a source device 3, a leading device 5 and magnetic devices 7 are arranged.

The housing 6 has shielding properties for shielding at least a second electromagnetic (EM) radiation having a second wavelength.

The source device 3 is adapted to provide an incident signal and provided in form of a laser. The incident signal comprises first electromagnetic (EM) radiation having a first substantially constant wavelength.

The leading device 5 is coupled to the source device 3, particularly in such manner to lead the incident signal emitted by the source device 3 along a leading direction through a signal-generation region 9 of the radiation generation arrangement 1.

The magnetic devices 7 are adapted to generate a magnetic field B in the signal-generation region 9 of the radiation generation arrangement 1. Preferably, the magnetic field B in the signal-generation region 9 is perpendicular to the leading direction. The magnetic devices 7 may be two rear-earth permanent magnets that are arranged opposite one another, thereby defining the signal-generation region and comprising an allow of neodymium, iron and boron.

The first electromagnetic radiation of the incident signal generates/provides the gravitational signal upon exposure to the magnetic field B when reaching the signal-generation region 9.

A modulation device is operatively coupled to the source device 3 and adapted to generate a modulated gravitational signal 11 by modifying the incident signal emitted by the source device 3. Particularly, the modulation device is adapted to modulate the gravitational signal generated in the signal-generation portion in order to generate a modulated gravitational signal 11. The modulation is carried out such that information to be transmitted is included in the signal output 11.

Particularly, the modulation device uses (at least) two different frequencies to modulate the incident signal emitted by the source device 3 in order to generate one or more modulated gravitational signal 11 including (at least) a first modulated gravitational signal having a first modulation frequency and a second modulated gravitational signal having a second modulation frequency.

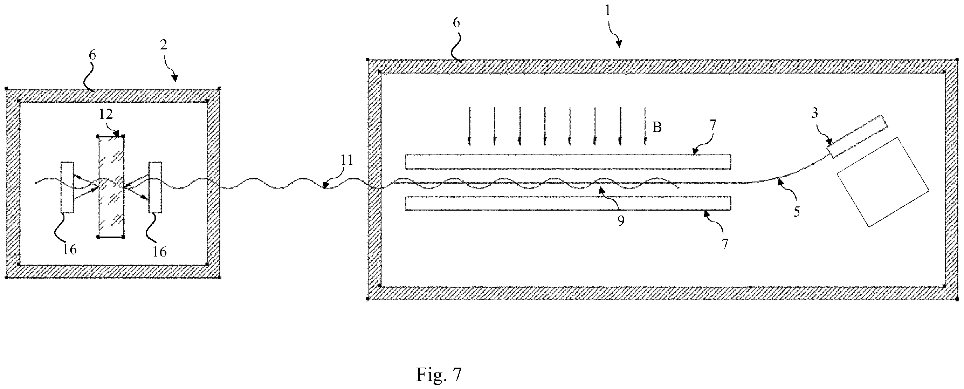

Fig. 7 shows an exemplary communication system using a radiation detection arrangement 2 for detection of a modulated gravitational signal along with the exemplary radiation generation arrangement 1 of Fig. 6.

In general, the radiation detection arrangement 2 of Fig. 7 comprises the components already described above in relation to Figs. 1 to 4, e.g. an excitation radiation source device adapted to emit excitation radiation (18) having one of the plurality of excitation frequencies to excite TADF material. Therefore, the above observations apply also here and are not repeated.

The radiation detection arrangement 2 receives a modulated gravitational signal 11 from the radiation generation arrangement 1.

The radiation detection arrangement 2 comprises a detection layer 12 comprising thermally activated delayed fluorescence TADF material, the thermally activated delayed fluorescence TADF material having a plurality of excitation frequencies.

The TADF material exhibiting upon excitation with excitation radiation a thermally activated delayed fluorescence TADF emission. Particularly, the TADF material has a TADF emission pattern with exposure to a modulated gravitational signal having a first modulation frequency and exhibiting a different TADF emission pattern with exposure to a modulated gravitational signal having a second modulation frequency.

One or more radiation detector devices 16 are communicatively coupled with a computing device and are adapted to detect TADF emission from the detection layer and provide respective detection data to the computing device.

The computing device computes detection data from the radiation detector device 16 to determine a TADF emission pattern with exposure to the modulated gravitational signal 11 having a first modulation frequency and a different TADF emission pattern with exposure to the modulated gravitational signal having the second modulation frequency.

Then, the determined TADF emission patterns are compared to determine, on the basis of the comparison, information comprised in the gravitational signal.

For example, the different modulation frequencies may be used to include information bitwise.

Above, the present invention has been described with reference to detection of radiation space born and from outer space, respectively, as well as of radiation from radioactive material. However, the present invention is not limited to such applications, but can be used to detect any radiation of (very) low intensity and application using such information.

| **Reference numeral list** | |
|---|---|
| B | Magnetic field |
| 1 | Radiation generation arrangement |
| 2 | Radiation detection arrangement |
| 3 | Source device (Laser) |
| 4 | External radiation |
| 5 | Leading device |
| 6 | Housing |
| 7 | Magnetic devices |
| 9 | Signal-generation region |
| 8 | Shieldable radiation |
| 10 | Gravitational signal |
| 11 | (modulated) gravitational signal |
| 12 | Detection layer |
| 14 | Excitation radiation source device |
| 16 | Radiation detector device |
| 18 | Excitation radiation |
| 20 | Planar detection surface |
| 22 | Curved detection surface |
| 24 | Detection layer's surface |
| 26 | Computing device |
| 28 | Thermally activated delayed fluorescence |
| 30 | Optical system |
| 32 | Homogenous emission pattern |
| 34 | Shifted emission pattern |
| 36 | Uniform distribution pattern |
| 38 | Shifted and deformed distribution pattern |

## Claims

1. Radiation detection arrangement for detection of a gravitational signal, the arrangement comprising:
- a computing device (26),
- a detection layer (12) comprising thermally activated delayed fluorescence TADF material, the thermally activated delayed fluorescence TADF material having a plurality of excitation frequencies,
- an excitation radiation source device adapted to emit excitation radiation having at least one of the excitation frequencies to excite the TADF material, wherein
-- the TADF material exhibiting upon excitation with excitation radiation a thermally activated delayed fluorescence TADF emission,
- a radiation detector device (16) communicatively coupled with the computing device (26), the radiation detector device (16) being adapted to detect TADF emission from the detection layer (12) and provide respective detection data to the computing device (12),
- the TADF material having a TADF emission pattern without exposure to gravitational signal and exhibiting different TADF emission pattern with exposure to the gravitational signal,
- the computing device (26) being adapted to
- compute detection data from the radiation detector device (16) to determine a TADF emission pattern without exposure to the gravitational signal and a different TADF emission pattern with exposure to the gravitational signal,
- compare the determined TADF emission patterns,
- determine, on the basis of the comparison, exposure to the gravitational signal.

2. The radiation detection arrangement of claim 1, wherein the detection layer (12) is at least one of
- planar,
- provided in a coating material,
- shaped as a part of a sphere,
- shaped as a hollow or solid sphere,
- shaped as a polyhedron.

3. The radiation detection arrangement of claim 1 or 2, wherein the radiation detector device (16) comprises at least one of
- a discrete radiation detector,
- a radiation detector array including at least two detector elements,
- electro-optical transducer,
- image intensifier tube,
- vacuum tube,
- CMOS chip
- a CCD chip.

4. The radiation detection arrangement of one of the preceding claims, comprising at least two radiation detector devices (16) wherein the detection layer is arranged between the at least two radiation detector devices (16).

5. The radiation detection arrangement of one of the preceding claims, comprising a control device (26) for controlling the operation of the excitation radiation source device (14), wherein the control devices (26) is adapted to operate the excitation radiation source device (14) in a constant emission mode and/or a variable/modifiable emission mode, comprising pulsed and/or periodical emission mode.

6. The radiation detection arrangement of one of the preceding claims, wherein the computing device (26) being able to compute detection data from the radiation detector device (16) during and/or following radiation emission from the excitation radiation source device (14).

7. The radiation detection arrangement of one of the preceding claims, comprising an optical system (30) being arranged between the detection layer (12) and the radiation detector device (16).

8. The radiation detection arrangement of one of the preceding claims, comprising a housing (6) accommodating the components of the radiation detection arrangement.

9. The radiation detection arrangement of the preceding claim, wherein the housing (6) has shielding properties for shielding of at least one of:
- electro-magnetic radiation;
- X-ray radiation;
- ultraviolet radiation;
- Gamma radiation;
- corpuscular radiation, comprising alpha radiation, beta radiation, neutrons and/or protons.

10. The radiation detection arrangement of one of the preceding claims,
- comprising at least one temperature sensing device for sensing temperature of at least one of
- the detection layer (12),
- the TADF material,
- the excitation radiation source device (14),
- the radiation detector device (16),
- the housing (6),
- the optical system (30),
- the computing device (26), and/or
- wherein the radiation detection arrangement or at least one part thereof is arranged in a temperature controlled environment.

11. Method of detecting a gravitational signal using a radiation detection arrangement, comprising:
- providing a detection layer comprising thermally activated delayed fluorescence TADF material, the thermally activated delayed fluorescence TADF material having having a plurality of excitation frequencies,
- emitting excitation radiation having at least one of the excitation frequencies by means of a excitation radiation source device onto the detection layer in order to excite the TADF material, wherein
-- the TADF material exhibiting upon excitation with excitation radiation a thermally activated delayed fluorescence TADF emission,
- detecting TADF emission from the detection layer by means of a radiation detector device communicatively coupled to a computing device, wherein
- the TADF material having a TADF emission pattern without exposure to the gravitational signal and exhibiting different TADF emission pattern with exposure to the gravitational signal,
- providing detection data from the radiation detector device to the computing device,
- computing the detection data from the radiation detector device (16) to determine a TADF emission pattern without exposure to the gravitational signal and a different TADF emission pattern with exposure to the gravitational signal,
- comparing the determined TADF emission patterns,
- determining, on the basis of the comparison, exposure to to the gravitational signal.

12. Method according to claim 11, further comprising:
- controlling the operation of the excitation radiation source device by means of a control device and
- emitting radiation, by operating the excitation radiation source device, in a constant emission mode and/or a variable/modifiable emission mode, comprising pulsed and/or periodical emission mode.

13. Method according to claim 11 or 12, wherein, in an excitation phase, phase excitation radiation is emitted onto the detection layer in order to excite the TADF material and, in a detection phase subsequent to the excitation phase, TADF emission from the detection layer is detected, wherein the excitation phase and the detection phase may overlap or there may be a transition phase between the excitation phase and the detection phase, during which transition phase neither excitation nor detection takes place.

14. Method according to one of the claims 11 to 13, further comprising arranging an optical system between the detection layer and the radiation detector device for adjusting the TADF emission onto the radiation detector device.

15. Method according to one of the claims 11 to 14, further comprising:
providing a housing, having shielding properties to shield at least one of:
- electro-magnetic radiation,
- X-ray radiation,
- Ultraviolet radiation,
- Gamma radiation,
- Corpuscular radiation,
- alpha radiation,
- beta radiation,
- neutrons
- protons.
